# EUROPEAN PATENT SPECIFICATION

(11) **EP 0 527 627 B1**
(45) Date of publication and mention of the grant of the patent: **23.04.1997**
(21) Application number: 92307305.0
(22) Date of filing: 10.08.1992
(51) Int. Cl.: F16B 37/12, B29C 65/64

(54) **Leakproof insert**
Dichter-Einsatz
Enpiècement étanche

(30) Priority: 12.08.1991 US 744083
(43) Date of publication of application: 17.02.1993
(73) Proprietor: EMHART INC., Newark, Delaware 19711 (US)
(72) Inventor: Gentile, Robert A., New Milford, Connecticut 06776 (US)
(74) Representative: Stagg, Diana Christine

(56) References cited:
- EP-A- 0 353 839
- DE-A- 1 704 771
- DE-A- 2 055 272

## Description

The present invention relates to a leakproof insert for post moulded use in plastic products.

Metal inserts are commonly used to enhance the structural or functional performance of plastic parts. These inserts may be installed by ultrasonically or electrically heating the insert and pressing it into the hole. Sealing rings and/or adhesive have been used to make sure that a leakproof pressure tight seal will be established between the outside surface of the insert and the surface of the hole in the plastic.

European Patent Application No 353 839 describes and claims a double ended fastener which is symmetrical about a mid-point on its longitudinal axis, has a pilot portion at each end, an encircling groove next to each pilot portion, a minor toothed portion next to said groove, a second like groove next to said minor toothed portion. and a major toothed portion next to said second groove and extending towards said mid-point.

German Patent No 1 704 771 relates to the provision of a fastening expander for an insert system.

It is an object of the present invention to provide an improved insert which will establish the desired leakproof pressure tight seal without the use of additional seal elements such as "o" rings or adhesives.

An advantage of the present invention is that the seal defined by the insert is not sensitive to variations arising in the plastic moulding process or from the insert installation method.

In general, a leakproof metal insert is disclosed for post moulded use in a plastic part having a corresponding receiving hole having a top portion tapering inwardly from an opening diameter to a constant reduced diameter portion comprising,
an upper cylinder portion for interconnecting the metal insert and the plastic part, said upper cylindrical portion including cylindrical knurled surface means, the outer diameter of said knurled surface means substantially corresponding to the opening diameter of the hole,
a lower cylindrical portion including annular outwardly projecting ridge means defining an outer diameter substantially corresponding to the reduced diameter of the hole, whereby
an intermediate cylindrical portion interconnects said upper and lower cylindrical portions, said intermediate cylindrical portion having an outer diameter smaller than said lower portion outer diameter, and a thickness thinner than the thickness of said lower cylindrical portion, and said lower cylindrical portion includes a cylindrical inner diameter (d2) smaller than that of the intermediate portion and selectively sized to co-operate with the surfaces of a split expander so that as the draw bar of the split expander is operated said lower cylindrical portion will be expanded outwardly embedding said annular outwardly projecting ridge means in the plastic part establishing therewith a leakproof pressure tight seal after removal of the expander.

Referring to the drawings:-
Figure 1 is a side view of a cylindrical screw thread insert which is to be sealed within a hole defined in a plastic part;
Figure 2 is a side view of the cylindrical thread insert after it has been installed by an insertion tool;

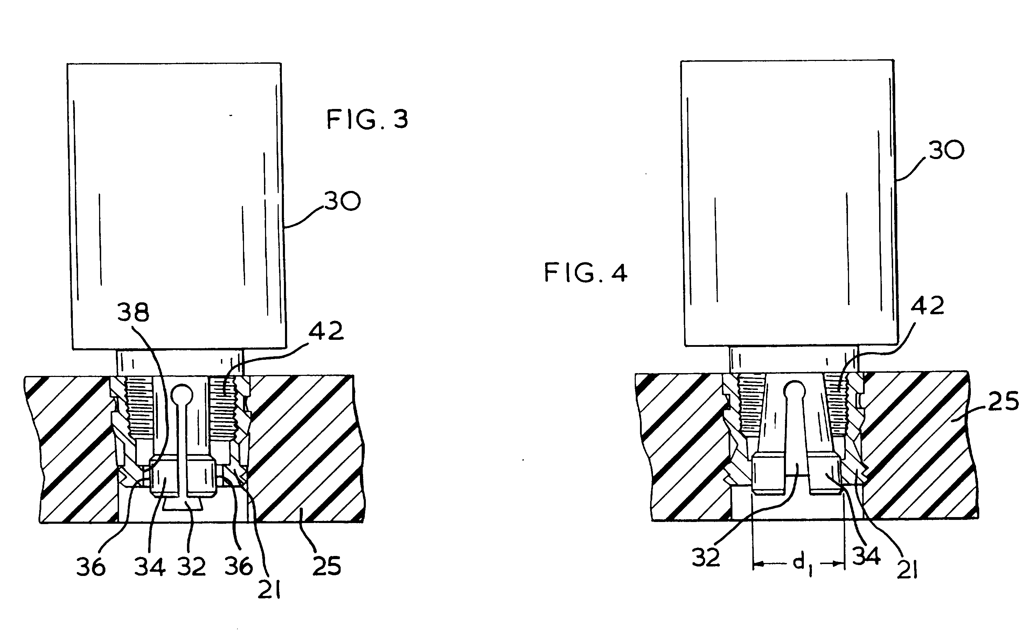

Figure 3 is a side view of the cylindrical insert as shown in Figure 2 with an expanding tool in place;

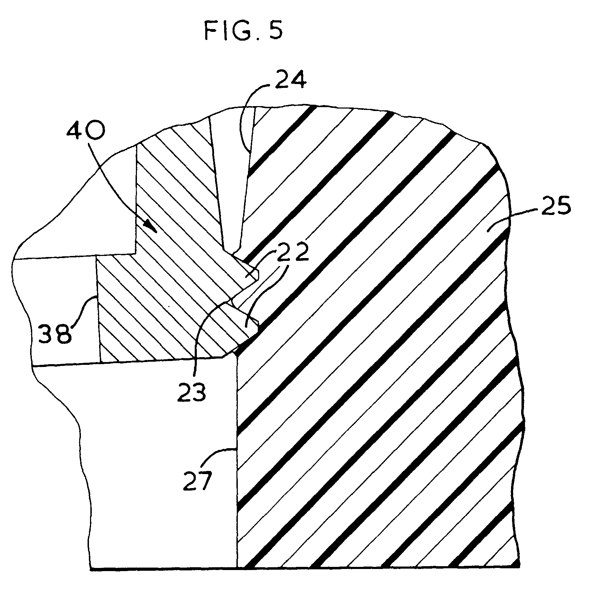

Figure 4 is a view similar to that of Figure 3 with the expanding tool fully actuated; and
Figure 5 is an enlarged presentation of a portion of Figure 4.

The insert for post moulded use in plastic parts is cylindrical and has cylindrical knurled surfaces 10, 12 separated by an annular groove 14 at the top of the insert. Below the lower knurled surface 12 are adjacent upper 16 and lower 17 inwardly tapered surfaces which define at their juncture an annular sharp edge 18. (The insert as thus far described corresponds to prior art inserts.) According to the present invention this insert is extended downwardly with a reduced diameter thinwall portion 20 which merges into a bottom annular portion 21 defined by annular ridges 22 separated by a groove 23.

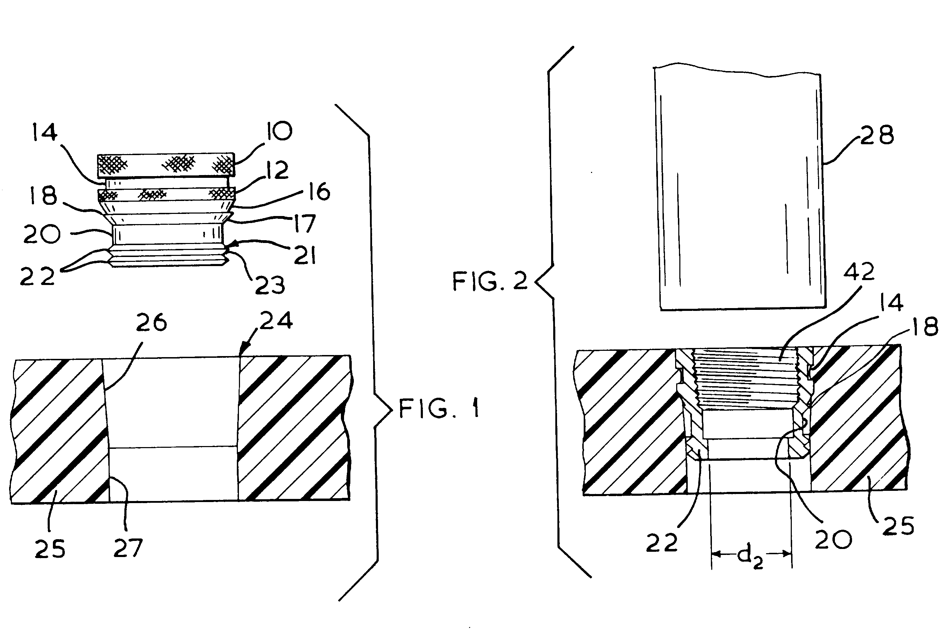

The cylindrical insert is to be installed into a receiving hole 24 in a plastic part 25. The hole 24 has an upper inwardly tapered portion 26 and a constant diameter lower portion 27. The inner diameter of the constant diameter lower portion 27 corresponds to the outer diameter of the bottom annular portion 21. The opening diameter corresponds to the outer diameter of the cylindrical knurled surfaces 10, 12 and the taper of the upper inwardly tapered portion is selected so that insertion will result in plastic being deformed into the annular groove 14 and around the annular sharp edge 18. The insert is installed (Figure 2) by using a conventional insertion tool 28 which uses electrical or ultrasonic energy to heat the metal insert and then presses the insert into the hole.

An expanding tool 30 having a draw bar 32 operatively associated with a split expander 34 is positioned so that operation of the expanding tool by drawing the draw bar upwardly will force the expander surfaces 36 against the inner diameter 38 of the bottom annular portion 21 permanently deforming this portion outwardly into the plastic body 25. The thinwall reduced diameter portion 20 facilitates this deformation.

The inner diameter d1 of the expanded bottom portion 21 is accordingly substantially increased from its original dimension d2 and this change is controlled by the start clearance between the expanded surfaces of the unexpanded expander and the original inner diameter d2. The cross section 40 of the bottom portion (Figure 5) is sufficiently massive so that the configuration of the cross section will remain substantially unchanged after its forced expansion. The insert is hollow and the top portion 42 of the hole through the insert may be threaded to receive a threaded connection (not shown).

## Claims

1. A leakproof metal insert for post moulded use in a plastic part (25) having a corresponding receiving hole (24) having a top portion (26) tapering inwardly from an opening diameter to a constant reduced diameter portion (27) comprising,
an upper cylindrical portiong for interconnecting the metal insert and the plastic part (25), said upper cylindrical portion including cylindrical knurled surface means (10, 12), the outer diameter of said knurled surface means (10, 12) substantially corresponding to the opening diameter of the hole (24), and a lower cylindrical portion (21) including annular outwardly projecting ridge means (22) defining an outer diameter substantially corresponding to the reduced diameter of the hole (24), whereby
an intermediate cylindrical portion (20) interconnects said upper and lower cylindrical portions (10, 12, 21), said intermediate cylindrical portion (20) having an outer diameter smaller than said lower portion outer diameter (22), and having a thickness thinner than the thickness of said lower cylindrical portion (21), and
said lower cylindrical portion (21) includes a cylindrical inner diameter (d2) smaller than that of the intermediate portion and selectively sized to co-operate with the surfaces of a split expander (34) so that as the draw bar (32) of the split expander (34) is operated said lower cylindrical portion (21) will be expanded outwardly embedding said annular outwardly projecting ridge means (22) in the plastic part (25) establishing therewith a leakproof pressure tight seal after removal of the expander (34).

2. A leakproof metal insert according to Claim 1, characterised in that said projecting ridge means comprises a pair of annular ridges (22) separated by an annular groove (23).

3. A leakproof metal insert according to Claim 1 characterised in that said cylindrical knurled surface means comprises a pair of annular knurled surfaces (10, 12) and an annular groove (14) therebetween.

4. A leakproof metal insert according to Claim 3, characterised in that said upper cylindrical portion further includes, between said annular knurled surface (12) and said cylindrical intermediate portion, upper (16) and lower (17) annular inwardly tapered surfaces which define at their junction an annular sharp edge (18).

## Patentansprüche

1. Lecksicherer Metalleinsatz für die Verwendung in einem Plastikteil (25) nach dem Formen, das ein entsprechendes Aufnahmeloch (24) mit einem oberen Abschnitt (26) aufweist, der sich von einem Öffnungsdurchmesser auf einen Abschnitt (27) mit konstantem vermindertem Durchmesser verengt, enthaltend
einen oberen zylindrischen Abschnitt zum Verbinden von Metalleinsatz und Plastikteil (25), wobei der obere zylindrische Abschnitt zylindrische geriffelte Oberflächenfelder (10, 12) enthält, der Außendurchmesser der zylindrischen geriffelten Oberflächenfelder (10, 12) im wesentlichen dem Öffnungsdurchmesser des Lochs (24) entspricht, und einen unteren zylindrischen Abschnitt (21) mit ringförmig nach außen vorstehenden Stegformen (22), die einen Außendurchmesser definieren, der im wesentlichen dem verminderten Durchmesser des Lochs (24) entspricht, wobei
ein zylindrischer Zwischenabschnitt (20) die oberen und unteren zylindrischen Abschnitte (10, 12, 21) verbindet und der zylindrische Zwischenabschnitt (20) einen Außendurchmesser kleiner als der Außendurchmesser des unteren Abschnittes (22) und eine Dicke geringer als die Dicke des unteren zylindrischen Abschnittes (21) hat, und
der untere zylindrische Abschnitt (21) einen zylindrischen Innendurchmesser (d2) kleiner als der des Zwischenabschnittes hat, der selektiv für das Zusammenwirken mit den Oberflächen eines gespaltenen Spreizgliedes (34) bemessen ist, so daß bei Betätigung des Zugankers (32) des gespreizten Spreizgliedes (34) der untere zylindrische Abschnitt (21) nach außen gedrückt wird und die ringförmig nach außen vorstehenden Stegformen (22) in den Plastikteil (25) eingebettet werden, wodurch nach Entfernen des Spreizgliedes eine lecksichere druckfeste Dichtung erzielt wird.

2. Lecksicherer Metalleinsatz nach Anspruch 1, dadurch gekennzeichnet, daß die nach außen vorstehenden Stegformen ein Paar ringförmiger Stege (22) umfassen, die durch eine Ringnut (23) getrennt sind.

3. Lecksicherer Metalleinsatz nach Anspruch 1, dadurch gekennzeichnet, daß die zylindrischen geriffelten Oberflächenfelder ein Paar von ringförmigen geriffelten Oberflächen (10, 12) und dazwischen eine ringförmige Nut (14) umfassen.

4. Lecksicherer Metalleinsatz nach Anspruch 3, dadurch gekennzeichnet, daß der obere zylindrische Abschnitt außerdem, zwischen der ringförmigen geriffelten Oberfläche (12) und dem zylindrischen Zwischenabschnitt, obere (16) und untere (17) ringförmige, nach innen sich verengende Flächen umfaßt, die an ihrem Zusammentreffen eine ringförmige scharfe Kante (18) definieren.

## Revendications

1. Insert métallique formant empiècement étanche aux fuites destiné à être utilisé comme prisonnier dans une pièce en matière plastique (25) ayant un trou de logement correspondant (24) qui possède une partie supérieure se rétrécissant vers le bas à partir d'un diamètre d'ouverture vers une partie (27) de diamètre réduit et constant, comprenant :
une partie cylindrique supérieure destinée à assembler l'insert métallique et la pièce en matière plastique (25), ladite partie supérieure cylindrique comprenant des moyens formant surface moletée cylindrique (10, 12), le diamètre extérieur desdits moyens formant surface moletée (10, 12) correspondant sensiblement au diamètre d'ouverture du trou (24), et une partie cylindrique inférieure (21) comprenant des moyens formant nervures (22), annulaires, en saillie vers l'extérieur, qui définissent un diamètre extérieur sensiblement correspondant au diamètre réduit du trou (24), dans lequel
une partie cylindrique intermédiaire (20) raccorde lesdites parties cylindriques supérieure et inférieure (10, 12, 21), ladite partie cylindrique intermédiaire (20) ayant un diamètre extérieur plus petit que le diamètre extérieur (22) de ladite partie inférieure, et une épaisseur inférieure à l'épaisseur de ladite partie cylindrique inférieure (21), et
ladite partie cylindrique inférieure (21) comprend un diamètre intérieur cylindrique (d2) plus petit que celui de la partie intermédiaire et sélectivement dimensionné pour coopérer avec les surfaces d'un dilatateur fendu (34), de sorte que, lorsque la barre de traction (32) du dilatateur fendu (34) est actionnée, ladite partie cylindrique inférieure (21) se dilate vers l'extérieur, en noyant lesdits moyens formant nervures annulaires (22) en saillie vers l'extérieur dans la pièce en matière plastique (25), en établissant ainsi avec cette dernière un joint étanche à la pression, à l'épreuve des fuites, après l'enlèvement du dilatateur (34).

2. Insert métallique à l'épreuve des fuites selon la revendication 1,
caractérisé en ce que lesdits moyens formant nervures en saillie comprennent une paire de nervures annulaires (22) séparées par une gorge annulaire (23).

3. Insert métallique à l'épreuve des fuites selon la revendication 1, caractérisé en ce que lesdits moyens formant surface moletée cylindrique comprennent deux surfaces moletées annulaires (10, 12) et une gorge annulaire (14) comprise entre ces dernières.

4. Insert métallique à l'épreuve des fuites selon la revendication 3, caractérisé en ce que ladite partie cylindrique supérieure comprend en outre, entre ladite surface moletée annulaire (12) et ladite partie intermédiaire cylindrique, des surfaces annulaires respectivement supérieure (16) et inférieure (17), à section décroissante vers l'intérieur, qui définissent une arête annulaire vive (18) à leur jonction.
